# EUROPEAN PATENT SPECIFICATION

(11) **EP 1 937 010 B1**
(45) Date of publication and mention of the grant of the patent: **14.04.2010**
(21) Application number: 06127054.2
(22) Date of filing: 22.12.2006
(51) Int. Cl.: H04W 24/06

(54) **Test apparatus**
Testvorrichtung
Appareil d'essais

(43) Date of publication of application: 25.06.2008
(73) Proprietor: TELEFONAKTIEBOLAGET LM ERICSSON (publ), 164 83 Stockholm (SE)
(72) Inventor: Bengtsson, Jonas, SE-261 71, Landskrona (SE); Hedlund, Per, SE-791 45, Falun (SE); Idebrant, Roger, SE-383 34, Mönsterås (SE)
(74) Representative: Andersson, Björn E.

(56) References cited:
- EP-A- 1 650 899
- US-A1- 2003 064 719
- US-A1- 2004 132 444
- US-A1- 2004 203 726
- US-A1- 2006 280 150

## Description

### Technical Field

The invention relates to a test apparatus for testing a portable communication unit.

### Background

Testing is normally an important part of the design procedure when designing an electronic apparatus. The design procedure is normally an iterative process. During the testing, bugs, or flaws in the design, may be discovered. Measures may then be taken during the next design iteration to overcome the discovered bugs. However, new bugs may then be introduced, and further testing is required to discover these.

The complexity of and time required for the testing normally increases with increasing complexity of the electronic apparatus. Portable communication units, such as mobile telephones, are developed with more and more complex designs. For example, mobile telephones normally need to have support for communication in many different types of communication networks, e.g. global system for mobile communication (GSM) networks, universal mobile telephone system (UMTS) networks, and/or wireless local-area networks (WLAN), e.g. according to the different IEEE 802.11 standards, and using short-range transceivers, such as Bluetooth transceivers and/or infrared (IR) transceivers.

Further, mobile telephones are provided with an ever increasing amount of functionality, e.g. for sending text messages, taking and sending pictures, listening to music, chatting, video encoding for e.g. video telephony, etc. Part of this functionality is normally implemented in software. Hence, the amount of software that needs to coexist and be operable with analog and digital hardware of mobile telephones is increasing. At the same time, the complexity of the analog and digital hardware is also increasing.

Testing of portable communication units can e.g. be performed in a computer-simulated communication network in e.g. a laboratory. Different scenarios that might occur in a real communication network may be simulated. However, such testing is inefficient e.g. because it is difficult to foresee all different situations and problems that might occur in such communication networks due to their inherent complexity.

Field testing of a portable communication unit may be performed by human operators moving together with the portable communication unit in a real communication network. The human operator may e.g. perform the testing by pushing buttons on or sending AT commands to the portable communication unit. Such field testing is inefficient and costly, e.g. due to the above described role of the human operator.

EP 1 569 481 discloses a method and system for remotely testing a wireless data device. The wireless data device is connected to a server machine through an interface. The server machine communicates with a client machine over a network, such as the Internet, a wide-area network, a local-area network, or simply a connection between two computers. The client machine maintains a graphical display identical to the graphical display of the wireless data device. A user may input a keystroke on the client machine. The keystroke is then passed to the wireless device. In this way, a local user can control a remote wireless data device and obtain the results displayed on the remote wireless device. Testing a wireless device with the system disclosed in EP 1 569 481 requires a human operator that provides the keystrokes to the client machine and monitors the graphical display of the wireless data device through the client machine in real time. Hence, such testing may also be inefficient and costly.

EP 0 837 615 discloses a method and apparatus for testing cellular services in a first location from a second location remote from the first location. A test set comprises a test cell phone and an access cell phone. A technician terminal can communicate with the test set via a communication network. Through the technician terminal, a human technician can, from a remote location, control the operation of the keyboard of the test cell phone and/or the access cell phone as if he was located at the same location as the test set. Further, technical personnel can establish a voice path to the test set by means of a telephone connected to the access cell phone via a public switch telephone network (PSTN) and a mobile switching center (MSC). Through said telephone, the human technician can hear the same audio information that is received by the test cell phone and generate the voice information that is to be transmitted by the test cell phone. The document discloses testing of cellular services and is not directed towards testing of the test cell phone or access cell phone themselves. Further, the test set requires a human technician to control the test set from the technicians terminal and monitor the test results in real time. As above, such testing may be inefficient and costly.

US 2004/0203726 A1 discloses an automatic testing system for a cellular phone module and a method thereof for automatically testing a cellular phone module. A control computer having a graphic controlled program for providing a test request, wherein the graphic controlled program is written in Labview program, and a testing device electrically connected to the control computer and the cellular phone module, for testing the cellular phone module in response to the testing request are disclosed. The testing result is sent back to the control computer from the testing device right after the test is finished. Then the testing result is displayed via a graphic interface and stored in a text file and a graph file. The cellular phone module is determined to be good or not via the testing result.

Due to the increasing complexity of portable communication units, which results in an increasing complexity for testing and verification, there is a need for more efficient means for testing and verifying portable communication units, such as mobile telephones.

### Summary

It is an object of the present invention to provide means for testing portable communication units more efficiently.

According to a first aspect, a test apparatus for testing a portable communication unit is provided. The test apparatus comprises a test unit, which is adapted to supply test input data to the portable communication unit and retrieve test output data at least from the portable communication unit in accordance with a test schedule. The test apparatus further comprises a wireless interface unit, which is adapted to provide a communication link between the test apparatus and a server. The server may be located remotely from the test apparatus. Furthermore, the test unit is adapted to retrieve, from the server, at least part of the test input data. Moreover, the test unit is adapted to forward, to the server, at least part of the test output data.

The test unit is adapted to initiate a restart of the portable communication unit if a system failure has occurred in the portable communication unit.

The test unit may be adapted to retrieve updated test schedules from the server.

The test input data may comprise software code for a data processing unit of the portable communication unit. The test unit may be adapted to upload the software code to the portable communication unit in accordance with the test schedule.

The test input data may comprise test-case control data for emulating user interaction with the portable communication unit. The test unit may be adapted to supply the test-case control data to the portable communication unit in accordance with the test schedule.

The test output data may comprise a state of a memory of the portable communication unit when a system failure occurs in the portable communication unit.

The test apparatus may further comprise a monitoring unit adapted to detect signals representing at least one environmental parameter of the test apparatus. Each environmental parameter may have an associated interval, in which operation of the test apparatus is facilitated.

The monitoring unit may be adapted to detect whether the test unit is shut down and, if the test unit is shut down, initiate a start up of the test unit in response to detecting, based on the signals representing the at least one environmental parameter, that each of said at least one environmental parameter is inside its associated interval.

The monitoring unit may be adapted to detect whether the test unit is in operation and, if the test unit is in operation, initiate a shut down of the test unit in response to detecting, based on the signals representing the at least one environmental parameter, that at least one of said at least one environmental parameter is outside its associated interval.

One environmental parameter may be a temperature of the test apparatus. Additionally or alternatively, one environmental parameter may be a voltage of a source supplying power to the test apparatus. Further additionally or alternatively, one environmental parameter may be an engine-monitoring parameter that indicates whether an engine of a vehicle is running. The engine-monitoring parameter may be inside its associated interval when the engine is running and outside its associated interval when the engine is not running.

The test unit may comprise a test-control unit. The test-control unit may be adapted to control the supply of the test input data to the portable communication unit. Moreover, the test-control unit may be adapted to control the retrieval of the test output data at least from the portable communication unit. The test-control unit may further be adapted to generate a first trigger signal during operation of the test-control unit. The test unit may further comprise a control unit. The control unit may be adapted to receive the first trigger signal. The control unit may be adapted to initiate a shut down of the test unit in response to that the first trigger signal has not been received during a predetermined amount of time.

The control unit may be adapted to generate a second trigger signal during operation of the control unit. The monitoring unit may be adapted to control a supply of power to the test unit. The monitoring unit may further be adapted to receive the second trigger signal. Moreover, the monitoring unit may be adapted to interrupt the supply of power in response to that the second trigger signal has not been received during a predetermined amount of time.

The test apparatus may comprise a location unit adapted to track the geographic location of the test apparatus. The location unit may be operatively connected to the test unit. The location unit may be adapted to generate test output data comprising geographical coordinates of the test apparatus. The location unit may comprise a global positioning system receiver.

The test unit may be implemented with a computer comprising a memory unit. The memory unit may have stored thereon, software code means for supplying test input data to the portable communication unit, retrieving test output data from the portable communication unit, retrieving, from the server, at least part of the test input data, and forwarding, to the server, at least part of the test output data when said software code means is run on the computer.

The test unit may be adapted to supply test input data to and retrieve test output data from at least two portable communication units. The test unit may be adapted to control a first and a second portable communication unit of said at least two portable communication units to communicate with each other via a mobile communication network.

According to a second aspect, a method of testing a portable communication unit is provided. According to the method, a communication link is provided between a test apparatus and server located remotely from the test apparatus using a wireless interface unit of the test apparatus. Furthermore, test input data is retrieved in the test apparatus from the server. Moreover, the test input data retrieved from the server is supplied to the portable communication unit by a test unit of the test apparatus according to a test schedule. Test output data, at least from the portable communication unit, is retrieved by the test unit according to the test schedule. At least part of the test output data is forwarded to the server.

If a system failure has occurred in the portable communication unit, a restart of the portable communication unit is initiated by the test unit.

According to a third aspect, a computer program product comprises computer program code means for executing the method when said computer program code means are run by an electronic device having computer capabilities.

According to a fourth aspect, a computer readable medium has stored thereon a computer program product comprising computer program code means for executing the method when said computer program code means are run by an electronic device having computer capabilities.

According to some embodiments, mobility of the test apparatus is facilitated. For example, the test apparatus may be placed in a vehicle that can move around in a real-world communication network, such as a cellular communication network. This in turn has the benefit that the portable communication unit can be efficiently tested in the real-world communication network, which is an advantage.

Further embodiments of the invention are defined in the dependent claims.

It should be emphasized that the term "comprises/comprising" when used in this specification is taken to specify the presence of stated features, integers, steps, or components, but does not preclude the presence or addition of one or more other features, integers, steps, components, or groups thereof.

### Brief Description of the Drawings

Further objects, features and advantages of the invention will appear from the following detailed description of the invention, reference being made to the accompanying drawings, in which:
Figs. 1, 2, and 4 are a block-diagrams of test apparatuses according to embodiments;
Fig. 3 is a block diagram of a test unit in a test apparatus according to an embodiment;
Fig. 5a and 5b are flowcharts for methods to be carried out in a test unit of a test apparatus according to an embodiment;
Fig. 6 is a flowchart for a method to be carried out in a control unit of a test apparatus according to an embodiment; and
Fig. 7 is a flowchart for a method to be carried out in a monitoring unit of a test apparatus according to an embodiment.

### Detailed Description

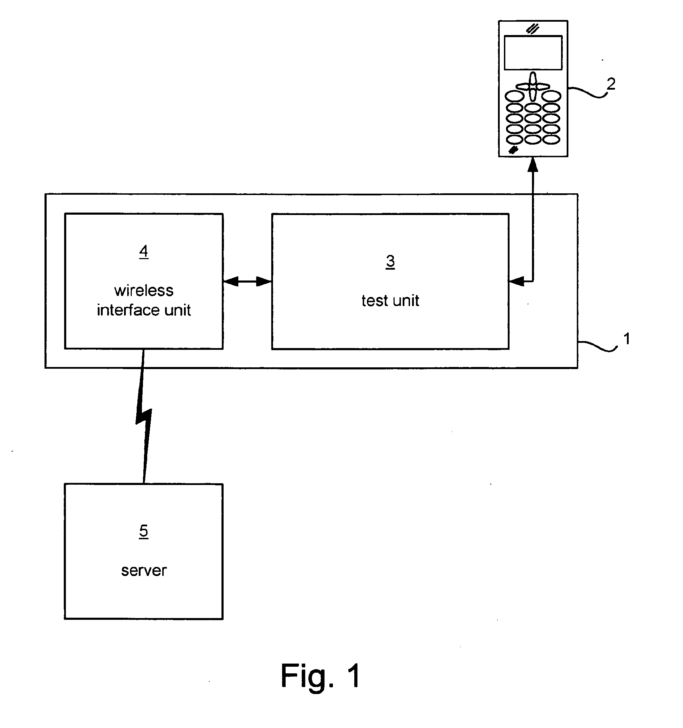

Fig. 1 illustrates an embodiment of a test apparatus 1 for testing a portable communication unit 2. In Fig. 1, the portable communication unit 2 is embodied as a mobile telephone. However, the portable communication unit 2 may be any kind of portable communication unit, such as a mobile radio terminal, pager, communicator, i.e. electronic organizer, smartphone, or the like. The portable communication unit 2 may be adapted to operate in one or more types of mobile communication networks, such as but not limited to GSM (Global System for Mobile communication) and/or UMTS (Universal Mobile Telephone System). For the rest of this specification, the portable communication unit 2 is referred to as the device under test (DUT).

In the embodiment illustrated in Fig. 1, the test apparatus 1 comprises a test unit 3. The test unit 3 is adapted to be operatively connected to the DUT 2. The operative connection may be provided via an electrical interface, such as but not limited to a universal serial bus (USB) interface or an RS-232 interface. The test unit 3 is adapted supply test input data to the DUT 2. Thereby, the test unit 3 may control the operation of the DUT 2. The test unit 3 may control the operation of the DUT 2 without a need for a human operator to be present to e.g. push keys or buttons on the DUT 2. The test unit 3 may further be adapted to retrieve test output data from the DUT 2. The test output data retrieved from the DUT 2 may e.g. include, but is not limited to, one or more of data relating to audio, video, and/or speech quality, data relating to data throughput, and a core dump, i.e. a state of a memory (not shown) of the DUT 2 when a system failure occurs in the DUT 2. The test output data retrieved from the DUT 2 may alternatively or additionally comprise status information of the DUT 2, such as states of finite state machines within the DUT 2, errors and/or warnings generated within the DUT 2. Said errors and/or warnings may e.g. be comprised in debug information for software running on a data processing unit of the DUT 2. Further additionally or alternatively, the test output data retrieved from the DUT 2 may comprise status information of a communication network in which the DUT 2 is operating. Such network status information may e.g. include, but is not limited to, one or more of authentication status, handover status, information regarding neighboring cells in a cellular network, and signal-to-noise ratio (SNR) and/or signal-to-interference ratio (SIR). The network status information may be useful e.g. for debugging purposes of the DUT 2. For example, if an error, such as a communication error, has occurred, the network status information may e.g. reveal information regarding external conditions that prevailed when the error occurred and/or whether the error occurred within the DUT 2 or in the communication network.

The test apparatus 1 may comprise a memory unit (not shown) for storing test input data and test output data. The memory unit may e.g. be a nonvolatile memory, such as a flash memory, optical storage, such as a compact disc (CD) or digital versatile disc (DVD) drive, or a hard disk drive. In addition, the test apparatus may be adapted to communicate with an external server 5. In the embodiment illustrated in Fig. 1, the test apparatus 1 comprises a wireless interface unit 4 adapted to provide a communication link between the test apparatus 1 and the server 5. As a nonlimiting example, the wireless interface unit 4 may be a modem. The modem may e.g. be, but is not limited to, a wireless local-area network (WLAN) modem, a high-speed downlink packet access (HSDPA) modem, a GSM modem, an enhanced data rates for GSM evolution (EDGE) modem, a general packet radio service (GPRS) modem, or a UMTS modem. According to an embodiment, the server 5 is a file transfer protocol (FTP) server. However, other types of servers than FTP servers may be used as well. The test apparatus may be adapted to connect to the server 5 e.g. over a wide-area network (WAN), such as the Internet.

The test unit 3 may be adapted to forward, or upload, the test output data, or portions thereof, to the server 5. This enables that a human operator supervising the testing can analyze the test output data as soon as it has been uploaded to the server 5. The server 5 may be located remotely from the test apparatus 1. Therefore, the human operator does not have to be at the same location as the test apparatus 1.

Additionally or alternatively, the test unit 3 may be adapted to retrieve new test input data from the server 5. Thereby, it is possible to remotely control which tests are to be performed on the DUT 2. Hence, the tests that are to be performed can be modified during operation of the test apparatus 1 without the need for a human operator to be located at the same place as the test apparatus 1.

The test unit 3 may be adapted to control the operation of the DUT 2 in accordance with a test schedule. The operation of the DUT 2 may be controlled by supplying the test input data to the DUT 2 in accordance with the test schedule. The test schedule may e.g. be stored in the above-mentioned memory device of the test apparatus 1. The test schedule may be stored in the form of a file written in a machine-interpretable language. The file may e.g. be a text file, such as a ".txt" file or a ".ini" file. The file may be a file written in a markup language, such as an extended markup language (XML) file. In some embodiments, the test unit 3 is adapted to retrieve new or updated test schedules from the server 5. Hence, the test schedule can be modified during operation of the test apparatus 1 without the need for a human operator to be located at the same place as the test apparatus 1.

According to some embodiments, test input data comprises software code for programming of a data processing unit, such as a CPU, of the DUT 2. In these embodiments, the test unit 3 is adapted to upload the software code to the DUT 2 in accordance with the test schedule. This operation is referred to as reprogramming the DUT 2. The DUT 2 may need to be set in a programming mode to enable the reprogramming operation. According to an embodiment, the DUT 2 is adapted to be set in the programming mode by setting a dedicated connector in the electrical interface, which provides the operative connection between the test unit 3 and the DUT 2, to a first logic state, e.g. '1'. The DUT 2 may further be adapted to be brought out of the programming mode and into an operational mode by setting the dedicated connector to a second logic state, e.g. '0'.

Reprogramming the DUT 2 may include adding, replacing, and/or deleting software code for individual functions and/or applications of the DUT 2. For example, reprogramming the DUT 2 may include updating firmware of the DUT 2.

Additionally or alternatively, reprogramming of the DUT 2 may include a complete reprogramming of the DUT 2, i.e. a full installation or reinstallation of all software in the DUT 2. Completely reprogramming a portable communication unit is sometimes referred to as "flashing" the portable communication unit.

According to some embodiments, the test input data comprises test-case control data, or test vectors, for emulating user interaction with the DUT 2 in accordance with a test case. In these embodiments, the test unit 3 is adapted to supply the test-case control data to the DUT 2 in accordance with the test schedule. Emulating user interaction with the DUT 2 may e.g. include emulating pushing of keys or buttons of the DUT 2 for invoking various functionalities of the DUT 2. The various functionalities may e.g. include, but is not limited to, making an outgoing call, answering or rejecting an incoming call, sending a message, such as a short message service (SMS) message or a multimedia message service (MMS) message, communicating over a WAN e.g. using a wireless application protocol (WAP), and/or running various software applications of the DUT 2.

According to one embodiment, supplying the test-case control data to the DUT 2 and/or retrieving at least part of the test output data from the DUT 2, e.g. for emulating user interaction with the DUT 2 as above, is accomplished by means of bidirectional software probes. Bidirectional software probes are described in US 2004/0059962 and will not be further described herein.

According to some embodiments, the DUT 2 is adapted to produce a core dump in the event that a system failure occurs in the DUT 2, e.g. if a software process running in the DUT 2 crashes or freezes. The core dump may e.g. include a state of a memory of the DUT 2 when the system failure occurs. The test output data retrieved from the DUT 2 may include the core dump.

According to some embodiments, the DUT 2 enters a locked state, e.g. a state in which the DUT 2 is inoperable, when said system failure occurs. In order to bring the DUT 2 out of the locked state, the DUT 2 may need to be restarted, e.g. by first turning off the power supply to the DUT 2 and the turning said power supply on. The test unit 3 may be adapted to initiate the restart of the DUT 2. For example, the test unit 3 may be adapted to control a power supply of the DUT 2. Thereby, testing of the DUT 2 can be continued in the event of a system failure in the DUT 2. The continued testing can be obtained without manual intervention of a human operator.

A system failure of the DUT 2 may occur due to that software code stored in a memory of the DUT 2 has been damaged or corrupted. In such an event, the system failure may continue to occur after each restart of the DUT 2. According to some embodiments, the test unit 3 is adapted to reprogram the DUT 2 in combination with initiating a restart of the DUT 2. Thereby, the testing of the DUT 2 can be continued in the event of damaged or corrupted software in the memory of the DUT 2.

According to some embodiments, the test unit 3 is implemented with a computer, such as but not limited to a personal computer (PC). The computer may comprise a memory unit. The memory unit of the computer may e.g. be a nonvolatile memory, such as a flash memory or a hard disk drive. Software code for performing the functions of the test unit 3 when run on the computer may be stored on the memory unit of the computer. The hardware components in the computer may be limited to the minimum required for use in the test apparatus 1. For example, auxiliary devices such as graphics boards, sound cards, and optical disk drives may be omitted in some embodiments. Further, a nonvolatile memory device such as a flash memory can be used instead of a hard disk drive. Thereby, mobility of the test apparatus 1 is facilitated e.g. in that power consumption, size, and/or weight can be reduced compared with a PC adapted e.g. for home or office use.

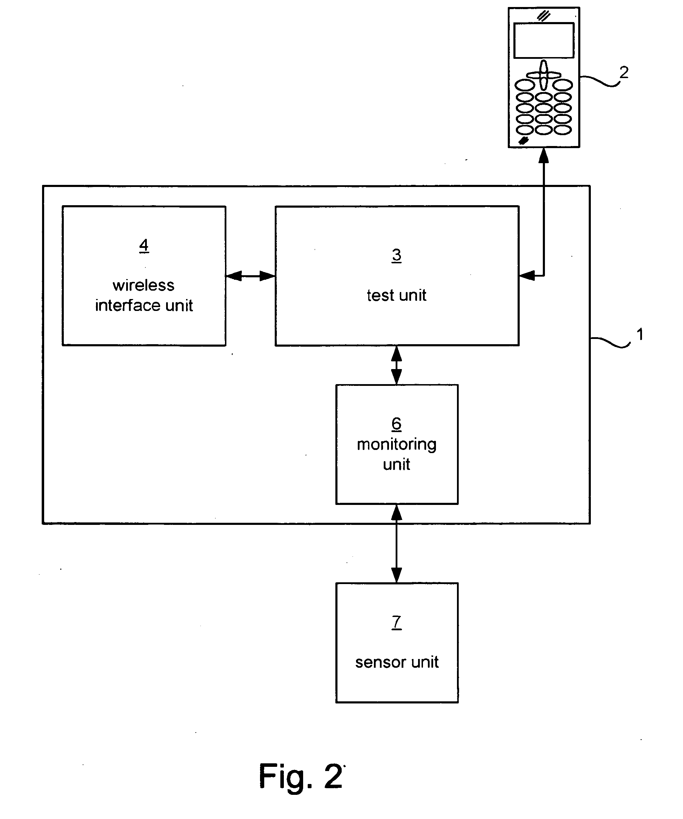

Fig. 2 illustrates another embodiment of the test apparatus 1. In addition to the test unit 3 and the wireless interface unit 4, the embodiment of the test apparatus 1 illustrated in Fig. 2 comprises a monitoring unit 6. The monitoring unit 6 is operatively connected to the test unit 3. The monitoring unit 6 is adapted to detect signals representing at least one environmental parameter of the test apparatus 1. Each environmental parameter has an associated interval, in which operation of the test apparatus 1 is facilitated. The monitoring unit 6 may be adapted to be operatively connected to one or more sensors adapted to sense or measure the environmental parameters. The sensors may then be adapted to supply the signals representing the environmental parameters to the monitoring unit. Said one or more sensors are collectively illustrated with a sensor unit 7 in Fig. 2. This is only for illustrative purposes, one or more of the sensors may be implemented with separate hardware units.

One environmental parameter may be a temperature of the test apparatus 1. For example, below a certain temperature, operation of the test apparatus 1 may be unsuitable due to condensation of moisture on electronic components of the test apparatus 1. Further, over another certain temperature, operation of the test apparatus 1 may be unsuitable due to a risk of overheating, and possibly damaging, electronic components of the test apparatus. As a nonlimiting example, the interval, in which operation of the test apparatus is facilitated, is -5°C to 55°C. A suitable temperature interval should be determined for each individual implementation of the test apparatus 1, e.g. in dependence of which electronic components that are comprised in the test apparatus 1.

One environmental parameter may be a voltage of a source, such as a battery, supplying power to the test apparatus 1. As a nonlimiting example, the interval, in which operation of the test apparatus is facilitated, is 11 V (Volts) to 18 V. A suitable voltage interval should be determined for each individual implementation of the test apparatus 1, e.g. in dependence of which type of battery that is used. In some embodiments, more than one source, such as a main battery and a backup battery, may be utilized for supplying power to the test apparatus 1. In these embodiments, separate environmental parameters may be provided for each of the sources.

In some embodiments, the test apparatus 1 is adapted to be mounted on a vehicle, such as but not limited to a passenger car. One source for supplying power to the test apparatus 1, such as said main battery, may be a battery of the vehicle. One environmental parameter may be an engine-monitoring parameter that indicates whether an engine of the vehicle is running. The engine-monitoring parameter may be inside its associated interval, in which operation of the test apparatus is facilitated, when the engine is running and outside the interval when the engine is not running. For example, the engine-monitoring parameter may be a discrete-valued parameter adopting a value '1' when the engine is running and a value '0' when the engine is not running. The interval, in which operation of the test apparatus is facilitated, may be a discrete interval consisting of the value '1'. In other words, operation of the test apparatus may be facilitated when the engine is running and energy from the engine may then be utilized to recharge the battery.

In some embodiments, the monitoring unit 6 is adapted to, if the test unit 3 is shut down, initiate a start up of the test unit 3 response to detecting, based on the signals representing the environmental parameters, that each of said at least one environmental parameter is inside its associated interval. Thereby, testing of the DUT 2 can be commenced or resumed when the environmental parameters indicate that operation of the test apparatus 1 is facilitated. The testing of the DUT 2 can be commenced or resumed without manual intervention of a human operator.

In some embodiments, the monitoring unit 6 is adapted to, if the test unit 3 is in operation, initiate a shut down of the test unit 3 in response to detecting, based on the signals representing the environmental parameters, that at least one of said at least one environmental parameter is outside its associated interval. Thereby, testing of the DUT 2 may be interrupted when the environmental parameters indicate that operation of the test apparatus 1 is not facilitated. The interruption of the testing of the DUT 2 can be accomplished without manual intervention of a human operator.

In embodiments wherein the monitoring unit 6 is adapted both to initiate the start up and the shut down, in accordance with the above, testing of the DUT 2 is performed when, and only when, the environmental parameters indicate that operation of the test apparatus is facilitated. By means of the monitoring unit 6, this can be accomplished without manual intervention of a human operator.

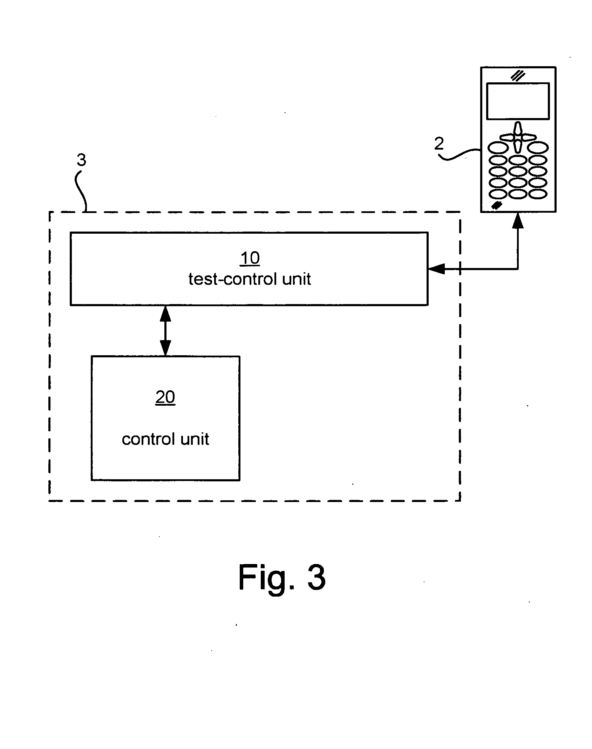

Fig. 3 illustrates an embodiment of the test unit 3. The test unit 3 comprises a test-control unit 10 and a control unit 20. The test-control unit 10 is adapted to control the supply of the test input data to the DUT 2. The test-control unit 10 is further adapted to control the retrieval of the test output data at least from the DUT 2. Moreover, the test-control unit 10 is adapted to generate a first trigger signal during operation of the test-control unit 10. The first trigger signal may e.g. be issued at regular intervals during operation of the test-control unit 10. The regular intervals may e.g. be, but is not limited to, once every 10, 20, 30, 40, 50, or 60 seconds. The first trigger signal enables supervision or monitoring of the status of the test-control unit 10. For example, presence of the first trigger signal indicates that the test-control unit 10 is fully functional. Absence of the first trigger signal, e.g. when the first trigger signal has not been issued within a predetermined amount of time, may e.g. indicate that the test-control unit 10 has been shut down, or that an operational failure has occurred in the test-control unit 10. Either way, absence of the first trigger signal indicates that no testing of the DUT 2 is performed by the test-control unit 10.

The control unit 20 is operatively connected to the test-control unit 10. The control unit 20 is adapted to receive the first trigger signal from the test-control unit 10. Thereby the control unit 20 can monitor or supervise the operation of the test-control unit 10.

The control unit 20 may be adapted to initiate a shut down of the test unit 3 in response to that the first trigger signal has not been received during a predetermined amount of time. The predetermined amount of time may e.g. be, but is not limited to, 60 seconds. By shutting down the test unit 3 power may be saved in the event that the test-control unit does not perform any testing of the DUT 2. This is an advantage for a test apparatus 1 that is mobile, because a lifetime for a battery (not shown) supplying power to the test apparatus 1 may be improved. Further, by means of the control unit 20, this power saving can be obtained without manual intervention of a human operator. Alternatively, the shutting down of the test unit 3 may be part of restarting the test unit 3 in the event of an operational failure in the test-control unit 10.

In embodiments wherein the test unit 3 is implemented with a computer, the test-control unit 10 and the control unit 20 may be embodied with software processes running on a central processing unit (CPU) of the computer. Initiating a shut down of the test unit 3 may include issuing a termination command, such as a "kill" command, for software processes running on the. Additionally, the termination command may be followed by a command for shutting down an operating system of the computer and/or a command for setting the computer in a low-power state, such as a command for completely turning off the computer or a command for setting the computer in a stand-by mode or sleep mode. Thereby, additional power may be saved.

In some embodiments, the test unit 3 or parts thereof are implemented with dedicated hardware units. For example, the test-control unit 10 and/or the control unit 20 (Fig. 3) may be implemented with dedicated hardware units, such as application-specific integrated circuits (ASICs), field-programmable gate arrays (FPGAs), or the like.

In an embodiment, the control unit 20 is adapted to generate a second trigger signal during operation of the control unit 20. The second trigger signal may e.g. be issued at regular intervals during operation of the control unit 20. The regular intervals may e.g. be, but is not limited to, once every 10, 20, 30, 40, 50, or 60 seconds. The monitoring unit 6 (Fig. 2) is, in this embodiment, adapted to receive the second trigger signal. The monitoring unit 6 is further adapted to control a supply of power to the test unit 3. Moreover, the monitoring unit 6 may be adapted to, if the monitoring unit 6 has not received the second trigger signal during a predetermined amount of time, interrupt the supply of power to the test unit 3.

The monitoring unit 6 may be adapted to determine whether the test unit 3 has been shut down. The determination may e.g. be based on that the second trigger signal has not been received during a predetermined amount of time.

In this embodiment, a shut down of the test unit 3 may be performed as outlined below. In response to detecting that an environmental parameter is outside its associated interval, the monitoring unit 6 generates a shut-down indication signal on an output of the monitoring unit. The test unit 3 detects the shut-down indication signal. The test-control unit 10 is then shut down. Consequently, the test-control unit 10 no longer generates the first trigger signal.

When the control unit 20 has not detected the first trigger signal during the predetermined amount of time, it determines that the test-control unit 10 no longer performs any testing of the DUT 2. The control unit 20 then initiates a shut down of the test unit 3.

When the test unit 3 has been shut down, the control unit 20 is no longer in operation. Therefore, it no longer generates the second trigger signal.

When the monitoring unit 6 has not detected the second trigger signal during a predetermined amount of time, it may interrupt the supply of power to the test unit 3. Thereby, power is saved. The power saving can be accomplished without manual intervention of a human operator.

In an alternative scenario, the test-control unit 10 may have discontinued to issue the first trigger signal due to an operational failure of the test-control unit 10. For example, if the test-control unit 10 is embodied with a software process running on a CPU, said software process may have crashed or freezed, e.g. due to an internal conflict within the CPU. When the control unit 20 has not detected the first trigger signal during a predetermined amount of time, it initiates a shut down of the test unit 3.

When the test unit 3 has been shut down, the control unit no longer generates the second trigger signal. When the monitoring unit 6 has not received the second trigger signal during a predetermined amount of time, it determines that the test unit 3 has been shut down. If each of the environmental parameters is inside its associated interval, in which operation of the test apparatus 1 is facilitated, the monitoring unit 6 may then initiate a start up of the test unit 3. Consequently, in this embodiment, continued testing of the DUT 2 is facilitated e.g. in the event that an operational failure has occurred in the test-control unit 10. By means of the monitoring unit 6, the continued testing of the DUT 2 can be obtained without manual intervention of a human operator.

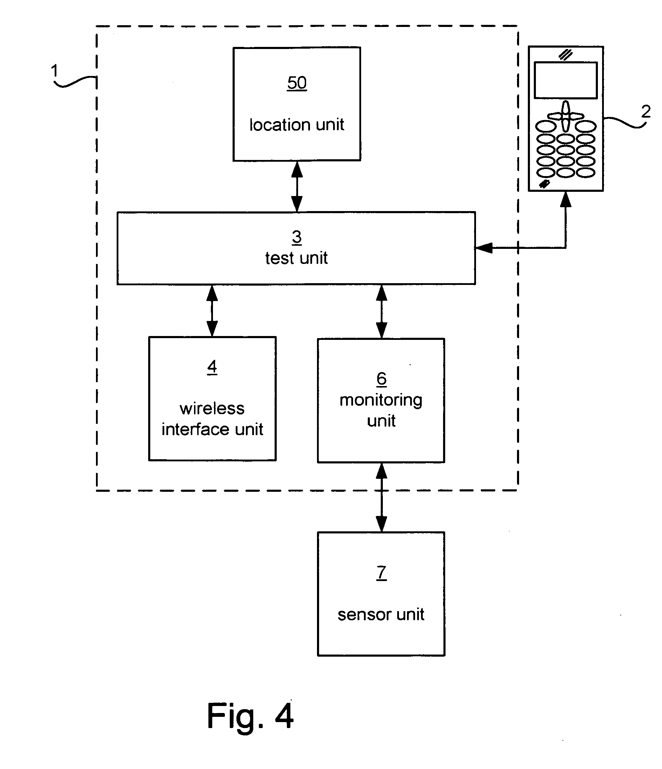

Fig. 4 illustrates another embodiment of the test apparatus 1. In this embodiment, the test apparatus 1 comprises a location unit 50. The location unit 50 is adapted to track the geographic location of the test apparatus 1. The test unit 3 is in this embodiment adapted to retrieve test output data from the location unit 50 in addition to retrieving test output data from the DUT 2. The test output data retrieved from the location unit may e.g. represent geographical coordinates of the test apparatus 1.

Including data representing geographical coordinates in the test output data can be beneficial for debugging purposes of the DUT 2. For example, if an error occurs in the DUT 2, and the geographical coordinates of the DUT 2 when the error occurs are known, it may possible to track what external conditions that prevailed when the error occurred. For example, what were the radio conditions? Were there many external interferers, such as other radio transceivers? Were there many obstructing objects, such as hills or large buildings? Was the DUT 2 located on the border between two serving cells in a cellular communication network?

The location unit 50 may be a satellite-navigation module. For example, the location unit 50 may be a global positioning system (GPS) module, comprising a GPS receiver. However, other types of location units, such as other types of satellite-navigation modules, which are operable with other types of satellite navigation systems, may also be used. The location unit 50 may be operatively connected to the test unit 3, e.g. via a wired interface, such as but not limited to a USB interface or an RS-232 interface, or a wireless interface, such as but not limited to a short-range radio interface, e.g. a Bluetooth interface, or an IR interface.

According to some embodiments, the test unit 3 is adapted to be operatively connected to two or more DUTs at a time for supplying test input data to and/or retrieve test output data from the two or more DUTs. Thereby, a relatively high degree of flexibility with regard to what types of test that can be performed is obtained at a relatively low complexity. Testing can be performed by means of communication between the two or more DUTs. Communication in this context may include e.g. voice calls or transfer of text messages or data between the two or more DUTs. Then there is no need for communication between the DUT 2 and an external communication device for performing the testing and the whole testing can be controlled via the test apparatus 1. The two or more DUTs can during the testing be connected to different communication networks, such as different types of communication systems (e.g. GSM or UMTS) and/or communication networks operated by different operators. Thereby, the behavior of the DUTs in different communication networks may be tested at the same time.

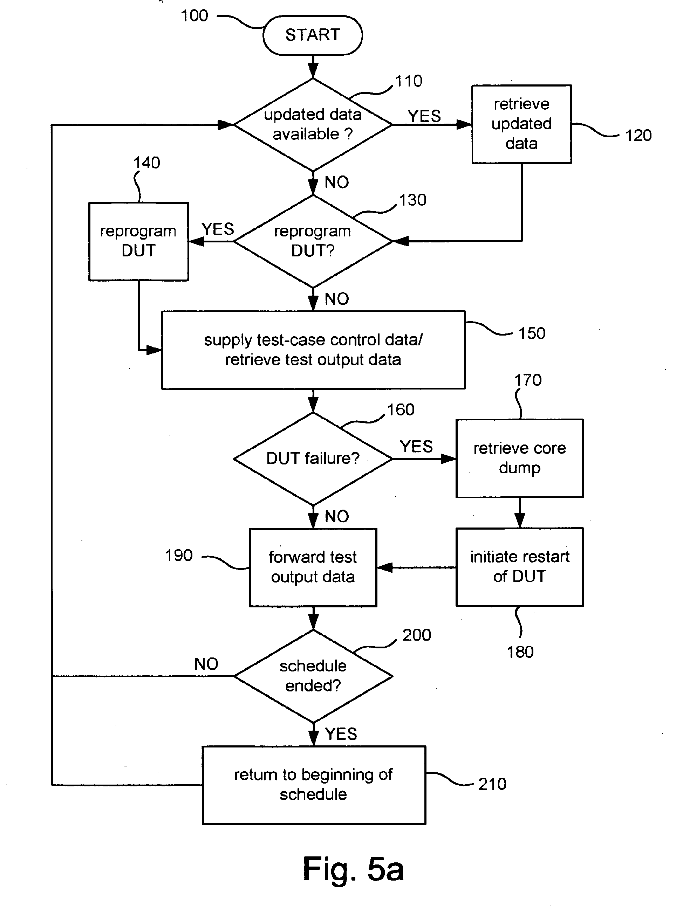

Fig. 5a illustrates, by means of a flowchart, a method to be carried out in the the test unit 3 (Figs. 1, 2, and 4) according to an exemplary embodiment. For example, the method may be executed by the test-control unit 10 (Fig. 3). The method begins in step 100. In step 110, the test unit 3 checks if updated data, such as test input data and/or test schedules, are available on the server 5. If the answer in step 110 is yes, the updated date is retrieved from the server 5 in step 120. The method then proceeds to step 130. If the answer in step 110 is no, the method proceeds directly to step 130.

In step 130, the test schedule is checked to see whether the DUT 2 should be reprogrammed, i.e. whether new software should be uploaded to the DUT 2. If the answer in step 130 is yes, the DUT 2 is reprogrammed in step 140. Then, the method proceeds to step 150. If the answer in step 130 is no, the method proceeds directly to step 150.

In step 150, test-case control data is supplied to the DUT 2, e.g. for emulating a user pushing keys or buttons on the DUT 2. Further, test output data is retrieved from the DUT 2. Test output data may also, in embodiments where the test apparatus 1 comprises the location unit 50, be retrieved from the location unit 50. The method then proceeds to step 160.

In step 160, it is checked whether a system failure has occurred in the DUT 2. If the answer in step 160 is yes, a core dump is retrieved from the DUT 2 in step 170. Then, in step 180, the test unit 3 initiates a restart of the DUT 2. The method then proceeds to step 190. If the answer in step 160 is no, method proceeds directly to step 190.

In step 190, test output data is forwarded to the server 5. Then, in step 200, the test schedule is checked to see whether the end of the test schedule has been reached. If the answer in step 200 is yes, the test unit 10 returns to the beginning of the test schedule in step 210. Then the testing is continued by returning to step 110. If the answer in step 200 is no, the testing is continued at the current position in the test schedule by returning to step 110.

The embodiment described with reference to Fig. 5a is only exemplary. The steps may be carried out in a different order. Some steps that are illustrated as being carried out sequentially may be carried out in parallel. For example, transferring data between the test apparatus 1 and the server 5, e.g. retrieving data, as in step 120, from and/or forwarding data, as in step 190, may be carried out simultaneously as testing of the DUT 2 is performed. This is advantageous e.g. if a large amount of data is to be transferred, because the testing then becomes more time efficient. Further, whether or not any test output data should be forwarded in step 190 may be specified in the test schedule. Similarly, if only a subset of the test output data is to be forwarded in step 190, said subset may be specified in the test schedule. Other steps may be included in the method and some of the steps in Fig. 5a may be omitted. In some embodiments, the method is ended if the answer in step 210 is yes.

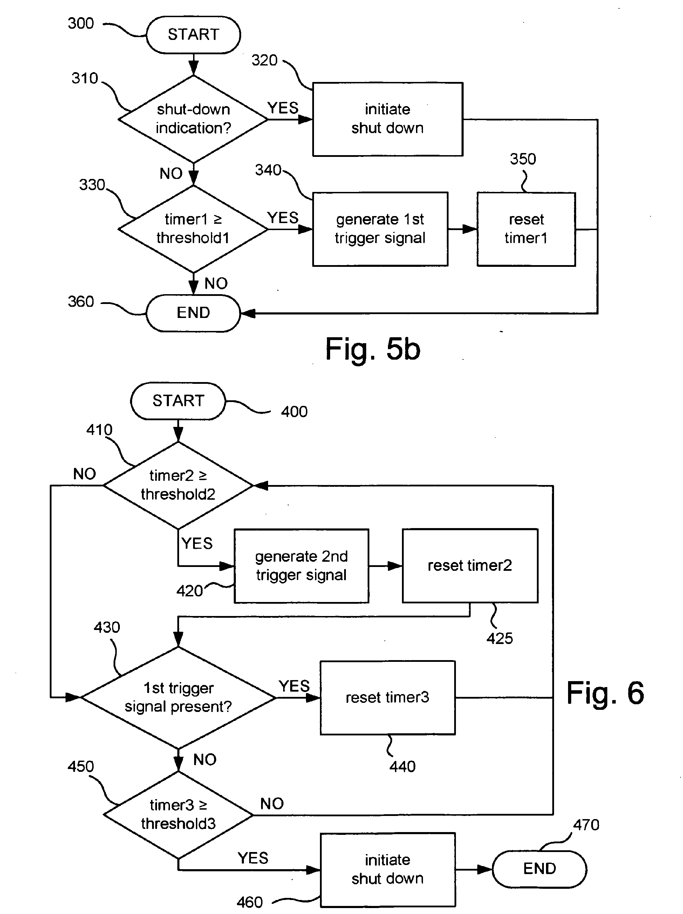

During operation, the test-control unit 10 needs to generate the first trigger signal according to some embodiments. For example, the first trigger signal may be generated at regular intervals. Further, in embodiments including the monitoring unit 6, the test-control unit 10 should be shut down if the monitoring unit 6 has generated a shut-down indication. Fig. 5b shows a flowchart of a method for generating the first trigger signal during operation and controlling shut down of the test-control unit 10 according to an embodiment. The embodiment utilizes a first timer, denoted timer1 in Fig. 5b. The timer timer1 may e.g. count the time in seconds from a given event, such as a reset event of timer1.

The method starts in step 300. Step 300 may comprise resetting timer1. In step 310, it is checked whether the monitoring unit 6 has generated a shut-down indication.

If the answer in step 310 is yes, shut down of the test-control unit 10 is initiated, and the method proceeds to step 360, wherein the method is ended.

If the answer in step 310 is no, it is checked in step 330 whether the time of timer1 equals or exceeds a first threshold value, denoted threshold1 in Fig. 5b. This threshold value may e.g. be, but is not limited to, 10, 20, 30, 40, 50, or 60 seconds.

If the answer in step 330 is yes, the first trigger signal is generated in step 340. Then, timer1 is reset in step 350, and the method is ended in step 360.

If the answer in step 330 is no, the method proceeds directly to step 360, wherein the method is ended.

The embodiment described with reference to Fig. 5b is only exemplary. The steps may be carried out in a different order. Some steps that are illustrated as being carried out sequentially may be carried out in parallel. Other steps may be included, and some of the steps in Fig. 5b may be omitted. For example, step 310 and 320 may be omitted in embodiments, wherein the test apparatus does not comprise the monitoring unit 6.

The method illustrated in Fig. 5b may be executed in the test-control unit 10 at regular or irregular intervals. For example, if the test-control unit 10 is adapted to execute the method illustrated in Fig. 5a, all or some of the steps 100-210 in Fig. 5a may comprise executing the method illustrated in Fig. 5b one or more times.

Fig. 6 illustrates, by means of a flowchart, operation of the control unit 20 (Fig. 3), according to an exemplary embodiment. A second and a third timer, denoted timer2 and timer3, respectively, in Fig. 6, are utilized in this embodiment. The timers timer2 and timer3 may e.g. count the time in seconds from given events, such as a reset event of timer2 and timer3, respectively.

The operation is started in step 400. Step 400 may comprise resetting timer2 and timer3. In step 410, it is checked whether the time of timer2 equals or exceeds a second threshold value, denoted threshold2 in Fig. 6. The second threshold value threshold2 may e.g. be, but is not limited to, 10, 20, 30, 40, 50, or 60 seconds. If the answer in step 410 is yes, the second trigger signal is generated in step 420. Then, timer2 is reset in step 425. Thereafter, the operation of the control unit 20 proceeds to step 430. If the answer in step 410 is no, the operation of the control unit 20 proceeds directly to step 430.

In step 430, it is checked whether the first trigger signal is present. If the answer in step 430 is yes, the timer timer3 is reset in step 440. Then, the operation of the control unit 20 returns to step 410.

If the answer in step 430 is no, it is checked in step 450 whether the time of timer 3 equals or exceeds a third threshold value, denoted threshold3 in Fig. 6. The third threshold value threshold3 may e.g. be, but is not limited to, 60 seconds. If the answer in step 450 is no, this indicates that the test-control unit 10 has not generated the first trigger signal during a predetermined amount of time, which is determined by threshold3. Hence, it is indicated that no testing of the DUT 2 is performed by the test-control unit 10. Therefore, a shut down of the test unit 3 is initiated in step 460.

If the answer in step 450 is no, the operation of the control unit 20 returns to step 410.

For e.g. embodiments wherein the test apparatus does not include the monitoring unit 6, it may be unnecessary for the control unit 20 to generate the second trigger signal. If this is the case, the operation of the control unit 20 may be simplified compared with the operation of the control unit 20 illustrated in Fig. 6. Steps 410, 420, and 425 may be omitted. Steps 400 and 440 may then be followed by step 430. Further, if the answer in step 450 is no, the operation of the control unit 20 may return to step 430.

The above embodiments of the operation of the control unit 20 are only exemplary. The steps may be carried out in a different order. Some steps that are illustrated as being carried out sequentially may be carried out in parallel. Other steps may be included, and some of the steps in Fig. 6 may be omitted.

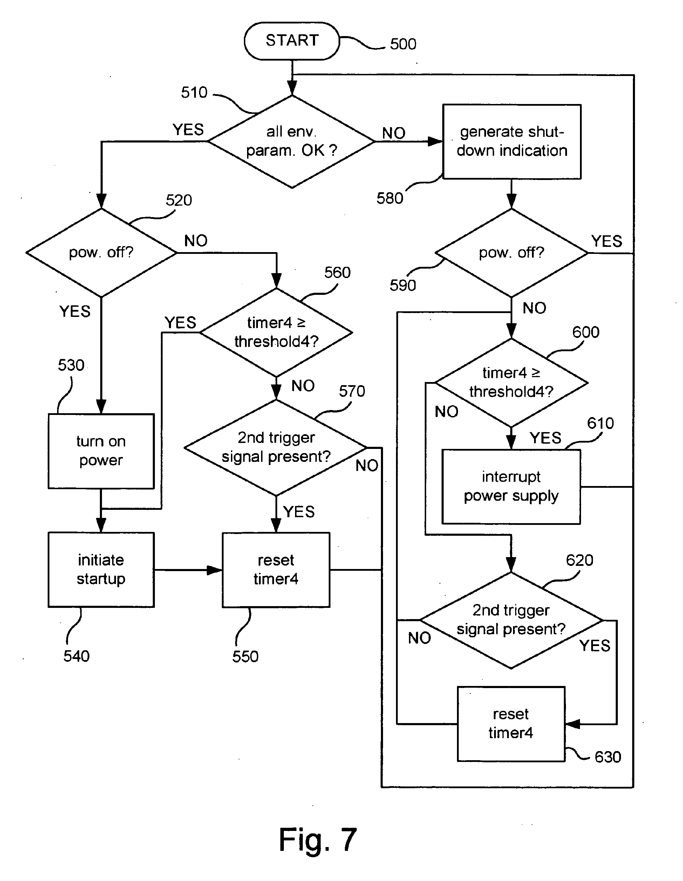

Fig. 7 illustrates, by means of a flowchart, operation of the monitoring unit 6 (Fig. 2 and Fig. 4) according to an exemplary embodiment. A fourth timer, denoted timer4 in Fig. 7, is utilized in this embodiment. The timer timer4 may e.g. count the time in seconds from a given event, such as a reset event of timer4.

The operation is started in step 500. Step 500 may comprise resetting timer4. In step 510, it is checked whether all environmental parameters are inside their associated intervals. If the answer in step 510 is yes, it is checked in step 520 whether the power supply to the test unit 3 has been interrupted, or turned off.

If the answer in step 520 is yes, the power supply to test unit 3 is turned on in step 530. In step 540, a start up of the test unit 3 is initiated. Then, timer4 is reset in step 550. Thereafter, the operation of the monitoring unit 6 returns to step 510.

If the answer in step 520 is no, it is checked in step 560 whether the time of timer4 exceeds a fourth threshold value, denoted threshold4 in Fig. 7. The fourth threshold value may e.g. be, but is not limited to, 60 seconds. If the answer in step 560 is yes, it is indicated that the second trigger signal has not been generated during a predetermined amount of time, determined by threshold4. This may in turn indicate that the test unit 3 is not in operation. Therefore, the operation of the monitoring unit proceeds to step 540, which is described above.

If the answer in step 560 is no, it is indicated that the second trigger signal has been issued during the predetermined amount of time. The operation then proceeds to step 570.

In step 570, it is checked whether the second trigger signal is present. If the answer in step 570 is yes, the operation of the monitoring unit 6 proceeds to step 550, which has been described above.

If the answer in step 570 is no, the operation of the monitoring unit 530 proceeds to step 510.

If the answer in step 510 is no, the environmental parameters indicate that operation of the test apparatus 1 is not facilitated. Therefore, a shut down indication is generated by the monitoring unit 6 in step 580. Then, it is checked in step 590 whether the power supply to the test unit 3 has been interrupted, or turned off. If the answer in step 590 is yes, the operation of the monitoring unit 6 returns to step 510.

If the answer in step 590 is no, it is checked in step 600 whether the time of timer4 equals or exceeds threshold4. If the answer in step 600 is yes, it is indicated that the second trigger signal has not been generated during the predetermined amount of time determined by threshold4. Then, the power supply to the test unit 3 is interrupted in step 610. The operation of the monitoring unit 6 then returns to step 510.

If the answer in step 600 is no, it is checked in step 620 whether the second trigger signal is present. If the answer in step 620 is yes, timer4 is reset in step 630. Then, the operation of the monitoring unit 6 returns to step 600. If the answer in step 620 is no, the operation of the monitoring unit 6 returns directly to step 600.

The embodiment described above in connection with Fig. 7 is only exemplary. The steps may be carried out in a different order. Some steps that are illustrated as being carried out sequentially may be carried out in parallel. Other steps may be included, and some of the steps in Fig. 7 may be omitted.

The test apparatus 1 according to any of the embodiments described above may be comprised in a mobile test equipment for testing the DUT 2. In addition to the test apparatus 1, the mobile test equipment may comprise a vehicle. The vehicle may be any of, but is not limited to, a passenger car, a bus, a truck, a train, a streetcar, or an airplane. The test apparatus 1 may be located, e.g. mechanically mounted or simply placed, on the inside or the outside of the vehicle. The mobile test equipment may further comprise the sensor unit 7 (Figs. 2 and 4).

The embodiments of the test apparatus 1 disclosed in this specification enables a reduction of power consumption, as has been described above. Further, automatic operation of the test apparatus 1, without the need for intervention of a human operator located at the same place as the test apparatus, is enabled. This in turn enhances the flexibility, as the test apparatus 1 can be made mobile. For example, the test apparatus 1 can be comprised in the mobile test equipment described above. This has the benefit that the DUT 2 can be efficiently tested in a real-world communication network, e.g. a cellular communication network. This may provide for an improved efficiency in designing portable communication units, such as mobile telephones, because the debugging capabilities are improved, e.g. compared with testing in a simulated communication network. Furthermore, compared with e.g. a test set up where a human operator controls the DUT 2, e.g. by pushing buttons or keys of the DUT 2, the amount of test input data and test output data that can be supplied to and retrieved from the DUT 2 is substantially increased with embodiments disclosed herein. This facilitates efficient testing of portable communication units as the complexity of portable communication units increase.

According to some embodiments, a method of testing the DUT 2 is provided. According to an embodiment, the method comprises providing a communication link between the test apparatus 1 and the server 5 using the wireless interface unit 4. According to the embodiment, the method further comprises retrieving, in the test apparatus 1, test input data from the server 5. Moreover, according to the embodiment, the method comprises supplying, by the test unit 3, the test input data to the DUT 2 and retrieving, by the test unit 3, test output data at least from the DUT 2 in accordance with a test schedule. In addition, according to the embodiment, the method comprises forwarding, to the server 5, at least part of the test output data.

The invention may be embedded in a computer program product, which enables implementation of the method and functions described herein. The invention may be carried out when the computer program product is loaded and run in a system having computer capabilities. Computer program, software program, program product, or software, in the present context mean any expression, in any programming language, code or notation, of a set of instructions intended to cause a system having a processing capability to perform a particular function directly or after conversion to another language, code or notation.

The present invention has been described above with reference to specific embodiments. However, other embodiments than the above described are possible within the scope of the invention. Different method steps than those described above, performing the method by hardware or software, may be provided within the scope of the invention. The different features and steps of the invention may be combined in other combinations than those described. The scope of the invention is only limited by the appended patent claims.

## Claims

1. A test apparatus (1) for testing a portable communication unit (2), comprising
a test unit (3) adapted to supply test input data to the portable communication unit (2) and retrieve test output data at least from the portable communication unit (2) in accordance with a test schedule; **characterized by**
a wireless interface unit (4) adapted to provide a communication link between the test apparatus (1) and a server (5) located remotely from the test apparatus (1); and in that
the test unit (3) is adapted to retrieve, from the server (5), at least part of the test input data; and forward, to the server (5), at least part of the test output data; and
the test unit (3) is adapted to initiate a restart of the portable communication unit (2) if a system failure has occurred in the portable communication unit (2).

2. The test apparatus (1) according to claim 1,
wherein the test unit (3) is adapted to retrieve updated test schedules from the server (5).

3. The test apparatus (1) according to claim 1 or 2,
wherein
the test input data comprises software code for a data processing unit of the portable communication unit (2); and
the test unit (3) is adapted to upload the software code to the portable communication unit (2) in accordance with the test schedule.

4. The test apparatus (1) according to any of the preceding claims, wherein the test input data comprises test-case control data for emulating user interaction with the portable communication unit (2), and the test unit (3) is adapted to supply the test-case control data to the portable communication unit (2) in accordance with the test schedule.

5. The test apparatus (1) according to any of the preceding claims, wherein the test output data comprises a state of a memory of the portable communication unit (2) when a system failure occurs in the portable communication unit (2).

6. The test apparatus (1) according to claim 1, further comprising a monitoring unit (6) adapted to detect signals representing at least one environmental parameter of the test apparatus (1), wherein each environmental parameter has an associated interval, in which operation of the test apparatus (1) is facilitated.

7. The test apparatus (1) according to claim 6,
wherein the monitoring unit (6) is adapted to detect whether the test unit (3) is shut down and, if the test unit (3) is shut down, initiate a start up of the test unit (3) in response to detecting, based on the signals representing the at least one environmental parameter, that each of said at least one environmental parameter is inside its associated interval.

8. The test apparatus (1) according to any of the claims 6-7, wherein the monitoring unit (6) is adapted to detect whether the test unit (3) is in operation and, if the test unit (3) is in operation, initiate a shut down of the test unit (3) in response to detecting, based on the signals representing the at least one environmental parameter, that at least one of said at least one environmental parameter is outside its associated interval.

9. The test apparatus (1) according to any of the claims 6-8, wherein one environmental parameter is a temperature of the test apparatus (1).

10. The test apparatus (1) according to any of the claims 6-9, wherein one environmental parameter is a voltage of a source supplying power to the test apparatus (1).

11. The test apparatus (1) according to any of the claims 6-10, wherein one environmental parameter is an engine-monitoring parameter that indicates whether an engine of a vehicle is running, wherein the engine-monitoring parameter is inside its associated interval when the engine is running and outside its associated interval when the engine is not running.

12. The test apparatus (1) according to any of the claims 6-11, wherein the test unit (3) comprises
a test-control unit (10) adapted to control the supply of the test input data to the portable communication unit (2); control the retrieval of the test output data at least from the portable communication unit (2); and generate a first trigger signal during operation of the test-control unit (10); and
a control unit (20) adapted to receive the first trigger signal and initiate a shut down of the test unit (3) in response to that the first trigger signal has not been received during a predetermined amount of time.

13. The test apparatus (1) according to claim 12,
wherein
the control unit (20) is adapted to generate a second trigger signal during operation of the control unit (20); and
the monitoring unit (6) is adapted to control a supply of power to the test unit (3); receive the second trigger signal; and interrupt the supply of power in response to that the second trigger signal has not been received during a predetermined amount of time.

14. The test apparatus (1) according to any of the previous claims, wherein the test apparatus (1) further comprises a location unit (50) adapted to track the geographic location of the test apparatus (1), wherein the location unit (50) is operatively connected to the test unit (3), and the location unit (50) is adapted to generate test output data comprising geographical coordinates of the test apparatus (1).

15. The test apparatus (1) according to claim 14,
wherein the location unit (50) comprises a global positioning system receiver.

16. The test apparatus (1) according to any of the preceding claims, wherein the test unit (3) is implemented with a computer comprising a memory unit having stored thereon software code means for
- supplying test input data to the portable communication unit (2);
- retrieving test output data from the portable communication unit (2); and
- retrieving, from the server (5), at least part of the test input data; and forwarding, to the server (5), at least part of the test output data
when said software code means is run on the computer.

17. The test apparatus (1) according to any of the preceding claims, wherein the test unit (3) is adapted to supply test input data to and retrieve test output data from at least two portable communication units.

18. The test apparatus (1) according to claim 17,
wherein the test unit (3) is adapted to control a first and a second portable communication unit of said at least two portable communication units to communicate via a mobile communication network.

19. A method of testing a portable communication unit (2), comprising
providing a communication link between a test apparatus (1) and server (5) located remotely from the test apparatus (1) using a wireless interface unit (4) of the test apparatus (1);
retrieving, in the test apparatus (1), test input data from the server (5);
supplying, by a test unit (3) of the test apparatus (1), the test input data retrieved from the server (5) to the portable communication unit (2) in accordance with a test schedule;
retrieving, by the test unit (3), test output data at least from the portable communication unit (2) in accordance with the test schedule;
forwarding, to the server (5), at least part of the test output data; and
if a system failure has occurred in the portable communication unit (2), initiating, by the test unit (3), a restart of the portable communication unit (2).

20. A computer program product comprising computer program code means for executing the method according to claim 19, when said computer program code means are run by an electronic device having computer capabilities.

21. A computer readable medium having stored thereon a computer program product comprising computer program code means for executing the method according to claim 19, when said computer program code means are run by an electronic device having computer capabilities.

## Patentansprüche

1. Testgerät (1) zum Testen einer tragbaren Kommunikationseinheit (2), umfassend:
eine Testeinheit (3), welche angepasst ist, Testeingabedaten an die tragbare Kommunikationseinheit (2) zuzuführen und Testausgabedaten wenigstens von der tragbaren Kommunikationseinheit (2) abzurufen, gemäß einem Testplan; **gekennzeichnet durch**
eine Drahtlos-Interface-Einheit (4), welche angepasst ist, eine Kommunikationsverbindung zwischen dem Testgerät (1) und einem Server (5) bereitzustellen, welcher von dem Testgerät (1) entfernt angeordnet ist; und **dadurch**, dass
die Testeinheit (3) angepasst ist, von dem Server (5) wenigstens einen Teil der Testeingabedaten abzurufen; und an den Server (5) wenigstens einen Teil der Testausgabedaten weiterzuleiten; und
die Testeinheit (3) angepasst ist, einen Neustart der tragbaren Kommunikationseinheit (2) zu initiieren, falls eine Systemstörung in der tragbaren Kommunikationseinheit (2) aufgetreten ist.

2. Testgerät (1) nach Anspruch 1, wobei die Testeinheit (3) zum Abrufen von aktualisierten Testplänen von dem Server (5) angepasst ist.

3. Testgerät (1) nach den Ansprüchen 1 oder 2, wobei
die Testeingabedaten Software-Code für eine Datenverarbeitungseinheit der tragbaren Kommunikationseinheit (2) umfassen; und
die Testeinheit (3) eingerichtet ist, den Software-Code zu der tragbaren Kommunikationseinheit (2) gemäß dem Testplan hochzuladen.

4. Testgerät (1) nach einem der vorangehenden Ansprüche, wobei die Testeingabedaten Testfall-Steuerungsdaten umfassen, um Benutzerinteraktion mit der tragbaren Kommunikationseinheit (2) zu emulieren, und die Testeinheit (3) angepasst ist, die Testfall-Steuerungsdaten der tragbaren Kommunikationseinheit (2) gemäß dem Testplan zuzuführen.

5. Testgerät (1) nach einem der vorangehenden Ansprüche, wobei die Testausgabedaten einen Zustand des Speichers der tragbaren Kommunikationseinheit (2) umfassen, wenn eine Systemstörung in der tragbaren Kommunikationseinheit (2) auftritt.

6. Testgerät (1) nach Anspruch 1, welches ferner eine Überwachungseinheit (6) umfasst, welche eingerichtet ist, Signale zu detektieren, welche wenigstens einen Umgebungsparameter des Testgeräts (1) abbilden, wobei jeder Umgebungsparameter ein zugehöriges Intervall hat, in welchem der Betrieb des Testgeräts (1) erleichtert wird.

7. Testgerät (1) nach Anspruch 6, wobei die Überwachungseinheit (6) angepasst ist, zu detektieren, ob die Testeinheit (3) heruntergefahren ist, und, falls die Testeinheit (3) heruntergefahren ist, ein Hochfahren der Testeinheit (3) zu initiieren, in Ansprechen auf das Detektieren, basierend auf den Signalen, welche den wenigstens einen Umgebungsparameter abbilden, dass jeder von den wenigstens einen Umgebungsparametern innerhalb seines zugehörigen Intervalls liegt.

8. Testgerät (1) nach einem der Ansprüche 6 bis 7, wobei die Überwachungseinheit (6) angepasst ist, zu detektieren, ob die Testeinheit (3) in Betrieb ist, und, falls die Testeinheit (3) in Betrieb ist, das Herunterfahren der Testeinheit (3) zu initiieren, in Ansprechen auf das Detektieren, basierend auf den Signalen, welche den wenigstens einen Umgebungsparameter abbilden, dass wenigstens einer von den wenigstens einen Umgebungsparametern außerhalb seines zugehörigen Intervalls liegt.

9. Testgerät (1) nach einem der Ansprüche 6 bis 8, wobei ein Umgebungsparameter eine Temperatur des Testgeräts (1) ist.

10. Testgerät (1) nach einem der Ansprüche 6 bis 9, wobei ein Umgebungsparameter eine Spannung einer Quelle ist, welche dem Testgerät (1) Leistung zuführt.

11. Testgerät (1) nach einem der Ansprüche 6 bis 10, wobei ein Umgebungsparameter ein Motorüberwachungsparameter ist, welcher angibt, ob ein Motor eines Fahrzeugs läuft, wobei der Motorüberwachungsparameter innerhalb seines zugehörigen Intervalls liegt, wenn der Motor läuft und außerhalb seines zugehörigen Intervalls, wenn der Motor nicht läuft.

12. Testgerät (1) nach einem der Ansprüche 6 bis 11, wobei die Testeinheit (3) umfasst
eine Test-Steuerungseinheit (10), angepasst, die Zufuhr der Testeingabedaten an die tragbare Kommunikationseinheit (2) zu steuern; das Abrufen der Testausgabedaten wenigstens von der tragbaren Kommunikationseinheit (2) zu steuern; und ein erstes Triggersignal während des Betriebs der Test-Steuerungeinheit (10) zu generieren; und
eine Steuerungseinheit (20), angepasst, das erste Triggersignal zu empfangen und ein Herunterfahren der Testeinheit (3) zu initiieren, in Ansprechen darauf, dass das erste Triggersignal während eines vorgegebenen Zeitraums nicht empfangen wurde.

13. Testgerät (1) nach Anspruch 12, wobei
die Steuerungseinheit (20) angepasst ist, ein zweites Triggersignal während des Betriebs der Steuerungseinheit (20) zu generieren; und
die Überwachungseinheit (6) eingerichtet ist, eine Leistungszufuhr zu der Testeinheit (3) zu steuern; das zweite Triggersignal zu empfangen; und die Zufuhr von Leistung in Ansprechen darauf zu unterbrechen, dass das zweite Triggersignal während eines vorgegebenen Zeitraums nicht empfangen wurde.

14. Testgerät (1) nach einem der vorherigen Ansprüche, wobei das Testgerät (1) ferner eine Positionseinheit (50) umfasst, angepasst, die geographische Position des Testgeräts (1) zu verfolgen, wobei die Positionseinheit (50) wirksam mit der Testeinheit (3) verbunden ist, und die Positionseinheit (50) angepasst ist, Testausgabedaten zu generieren, welche geographische Koordinaten des Testgeräts (1) umfassen.

15. Testgerät (1) nach Anspruch 14, wobei die Positionseinheit (50) einen Empfänger für das globale Positionsbestimmungssystem (GPS) umfasst.

16. Testgerät (1) nach einem der vorangehenden Ansprüche, wobei die Testeinheit (3) mit einem Computer implementiert ist, welcher eine Speichereinheit umfasst, auf welcher Software-Codemittel gespeichert sind zum
- Zuführen von Testeingabedaten an die tragbare Kommunikationseinheit (2);
- Abrufen von Testausgabedaten von der tragbaren Kommunikationseinheit (2); und
- Abrufen, von dem Server (5), von wenigstens einem Teil der Testeingabedaten; und Weiterleiten, an den Server (5), von wenigstens einem Teil der Testausgabedaten
wenn das Softwarecodemittel auf dem Computer abläuft.

17. Testgerät (1) nach einem der vorangehenden Ansprüche, wobei die Testeinheit (3) angepasst ist zum Zuführen von Testeingabedaten zu und zum Abrufen von Testausgabedaten von wenigstens zwei tragbaren Kommunikationseinheiten.

18. Testgerät (1) nach Anspruch 17, wobei die Testeinheit (3) angepasst ist, eine erste und eine zweite tragbare Kommunikationseinheit von den wenigstens zwei tragbaren Kommunikationseinheiten zu steuern, um über ein Mobilkommunikationsnetzwerk zu kommunizieren.

19. Verfahren zum Testen einer tragbaren Kommunikationseinheit (2), enthaltend
Bereitstellen einer Kommunikationsverbindung zwischen einem Testgerät (1) und Server (5), welcher von dem Testgerät (1) entfernt angeordnet ist, wobei eine Drahtlos-Interface-Einheit (4) des Testgeräts (1) genutzt wird;
Abrufen, in dem Testgerät (1), von Testeingabedaten von dem Server (5);
Zuführen, durch eine Testeinheit (3) des Testgeräts (1), von den Testeingabedaten, welche aus dem Server (5) abgerufen werden, an die tragbare Kommunikationseinheit (2), gemäß einem Testplan;
Abrufen, durch die Testeinheit (3), von Testausgabedaten wenigstens von der tragbaren Kommunikationseinheit (2), gemäß einem Testplan;
Weiterleiten, an den Server (5), von wenigstens einem Teil der Testausgabedaten; und
falls eine Systemstörung in der tragbaren Kommunikationseinheit (2) aufgetreten ist, Initiieren, durch die Testeinheit (3), eines Neustarts der tragbaren Kommunikationseinheit (2).

20. Computerprogrammprodukt, welches Computerprogrammcodemittel zum Ausführen des Verfahrens nach Anspruch 19 umfasst, wenn die Computerprogrammcodemittel von einer elektronischen Einrichtung ausgeführt werden, welche Computer-Einsatzmöglichkeiten hat.

21. Computerlesbares Medium, auf welchem ein Computerprogrammprodukt gespeichert ist, welches Computerprogrammcodemittel zum Ausführen des Verfahrens nach Anspruch 19 umfasst, wenn die Computerprogrammcodemittel von einer elektronischen Einrichtung ausgeführt werden, welche Computer-Einsatzmöglichkeiten hat.

## Revendications

1. Appareil (1) de test destiné à tester une unité portative (2) de communication, comprenant :
une unité (3) de test apte à fournir des données d'entrée de test à l'unité portative (2) de communication et à récupérer des données de sortie de test au moins de l'unité portative (2) de communication en fonction d'un programme de test ; **caractérisé :**
**par** une unité (4) d'interface sans fil apte à fournir une liaison de communication entre l'appareil (1) de test et un serveur (5) situé à distance de l'appareil (1) de test ; et
en ce que l'unité (3) de test est apte à récupérer, du serveur (5), au moins une partie des données d'entrée de test ; et à acheminer, jusqu'au serveur (5), au moins une partie des données de sortie de test ; et
en ce que l'unité (3) de test est apte à initialiser un redémarrage de l'unité portative (2) de communication s'il s'est produit une défaillance de système dans l'unité portative (2) de communication.

2. Appareil (1) de test selon la revendication 1, dans lequel l'unité (3) de test est apte à récupérer, du serveur (5), des programmes de test mis à jour.

3. Appareil (1) de test selon la revendication 1 ou 2,
dans lequel les données d'entrée de test comprennent un code de logiciel pour une unité de traitement de données de l'unité portative (2) de communication ; et
dans lequel l'unité (3) de test est apte à télécharger le code de logiciel dans l'unité portative (2) de communication en fonction du programme de test.

4. Appareil (1) de test selon l'une quelconque des revendications précédentes, dans lequel les données d'entrée de test comprennent des données de commande de cas de test destinées à émuler une interaction d'utilisateur avec l'unité portative (2) de communication, et dans lequel l'unité (3) de test est apte à fournir les données de commande de cas de test à l'unité portative (2) de communication en fonction du programme de test.

5. Appareil (1) de test selon l'une quelconque des revendications précédentes, dans lequel les données de sortie de test comprennent un état d'une mémoire de l'unité portative (2) de communication lorsqu'une défaillance de système se produit dans l'unité portative (2) de communication.

6. Appareil (1) de test selon la revendication 1, comprenant en outre une unité (6) de surveillance apte à détecter des signaux représentant au moins un paramètre d'environnement de l'appareil (1) de test, dans lequel chaque paramètre d'environnement a un intervalle associé, ce par quoi la mise en oeuvre de l'appareil (1) de test est facilitée.

7. Appareil (1) de test selon la revendication 6, dans lequel l'unité (6) de surveillance est apte à détecter si l'unité (3) de test est arrêtée et, si l'unité (3) de test est arrêtée, à initialiser un démarrage de l'unité (3) de test en réponse à la détection, basée sur les signaux représentant l'au moins un paramètre d'environnement, que chacun desdits au moins un paramètre d'environnement est à l'intérieur de son intervalle associé.

8. Appareil (1) de test selon l'une quelconque des revendications 6 et 7, dans lequel l'unité (6) de surveillance est apte à détecter si l'unité (3) de test est en fonctionnement et, si l'unité (3) de test est en fonctionnement, à initialiser un arrêt de l'unité (3) de test en réponse à la détection, basée sur les signaux représentant l'au moins un paramètre d'environnement, qu'au moins un desdits au moins un paramètre d'environnement est à l'extérieur de son intervalle associé.

9. Appareil (1) de test selon l'une quelconque des revendications 6 à 8, dans lequel un paramètre d'environnement est une température de l'appareil (1) de test.

10. Appareil (1) de test selon l'une quelconque des revendications 6 à 9, dans lequel un paramètre d'environnement est une tension d'une source d'alimentation de l'appareil (1) de test.

11. Appareil (1) de test selon l'une quelconque des revendications 6 à 10, dans lequel un paramètre d'environnement est un paramètre de surveillance de moteur qui indique si un moteur d'un véhicule tourne, dans lequel le paramètre de surveillance de moteur est à l'intérieur de son intervalle associé lorsque le moteur tourne et à l'extérieur de son intervalle associé lorsque le moteur ne tourne pas.

12. Appareil (1) de test selon l'une quelconque des revendications 6 à 11, dans lequel l'unité (3) de test comprend :
une unité (10) de commande de test apte à commander la fourniture des données d'entrée de test à l'unité portative (2) de communication ; à commander la récupération des données de sortie de test au moins de l'unité portative (2) de communication et à engendrer un premier signal de déclenchement durant la mise en oeuvre de l'unité (10) de commande de test ; et
une unité (20) de commande apte à recevoir le premier signal de déclenchement et à initialiser un arrêt de l'unité (3) de test en réponse à ce que le premier signal de déclenchement n'a pas été reçu durant une période prédéterminée de temps.

13. Appareil (1) de test selon la revendication 12,
dans lequel l'unité (20) de commande est apte à engendrer un second signal de déclenchement durant la mise en oeuvre de l'unité (20) de commande ; et
dans lequel l'unité (6) de surveillance est apte à commander une fourniture d'énergie à l'unité (3) de test ; à recevoir le second signal de déclenchement ; et à interrompre la fourniture d'énergie en réponse à ce que le second signal de déclenchement n'a pas été reçu durant une période prédéterminée de temps.

14. Appareil (1) de test selon l'une quelconque des revendications précédentes, dans lequel l'appareil (1) de test comprend en outre une unité (50) de localisation apte à suivre la localisation géographique de l'appareil (1) de test, dans lequel l'unité (50) de localisation est connectée fonctionnellement à l'unité (3) de test, et dans lequel l'unité (50) de localisation est apte à engendrer des données de sortie de test comprenant des coordonnées géographiques de l'appareil (1) de test.

15. Appareil (1) de test selon la revendication 14, dans lequel l'unité (50) de localisation comprend un récepteur du système global de positionnement.

16. Appareil (1) de test selon l'une quelconque des revendications précédentes, dans lequel l'unité (3) de test est mise en oeuvre à l'aide d'un processeur comprenant une unité de mémoire dans laquelle est mémorisé un moyen formant code de logiciel pour :
- fournir des données d'entrée de test à l'unité portative (2) de communication ;
- récupérer des données de sortie de test de l'unité portative (2) de communication ; et
- récupérer, du serveur (5), au moins une partie des données d'entrée de test ; et acheminer, au serveur (5), au moins une partie des données de sortie de test lorsque ledit moyen formant code de logiciel s'exécute sur le processeur.

17. Appareil (1) de test selon l'une quelconque des revendications précédentes, dans lequel l'unité (3) de test est apte à fournir des données d'entrée de test et à récupérer des données de sortie de test d'au moins deux unités portatives de communication.

18. Appareil (1) de test selon la revendication 17, dans lequel l'unité (3) de test est apte à commander une première et une deuxième unité portative de communication desdites au moins deux unités portatives de communication pour communiquer via un réseau de communication mobile.

19. Procédé de test d'une unité portative (2) de communication, comprenant :
la fourniture d'une liaison de communication entre un appareil (1) de test et un serveur (5) situé à distance de l'appareil (1) de test en utilisant une unité (4) d'interface sans fil de l'appareil (1) de test ;
la récupération, dans l'appareil (1) de test, de données d'entrée de test provenant du serveur (5) ;
la fourniture, par une unité (3) de test de l'appareil (1) de test à l'unité portative (2) de communication, des données d'entrée de test récupérées du serveur (5), en fonction d'un programme de test ;
la récupération, par l'unité (3) de test, de données de sortie de test au moins à partir de l'unité portative (2) de communication, en fonction du programme de test ;
l'acheminement, au serveur (5), d'au moins une partie des données de sortie de test ; et
s'il s'est produit une défaillance de système dans l'unité portative (2) de communication, l'initialisation, par l'unité (3) de test, d'un redémarrage de l'unité portative (2) de communication.

20. Produit programme informatique comprenant un moyen formant code de programme informatique pour exécuter le procédé selon la revendication 19, lorsque ledit moyen formant code de programme informatique est exécuté par un dispositif électronique ayant des capacités de processeur.

21. Support lisible par processeur sur lequel est mémorisé un produit programme informatique comprenant un moyen formant code de programme informatique pour exécuter le procédé selon la revendication de 19, lorsque ledit moyen formant code de programme informatique est exécuté par un dispositif électronique ayant des capacités de processeur.
